# EUROPEAN PATENT SPECIFICATION

(11) **EP 1 870 742 B1**
(45) Date of publication and mention of the grant of the patent: **02.12.2009**
(21) Application number: 06300712.4
(22) Date of filing: 21.06.2006
(51) Int. Cl.: G02B 3/14, G02B 26/02

(54) **Tri-liquid lens**
Dreifache Flüssiglinse
Lentille triliquide

(43) Date of publication of application: 26.12.2007
(73) Proprietor: Varioptic, 69007 Lyon (FR)
(72) Inventor: Berge, Bruno, 69002, LYON (FR)

(56) References cited:
- WO-A-2004/038480
- WO-A-2004/102253
- WO-A-2005/096029
- FR-A1- 2 822 247
- US-A1- 2003 006 140
- US-A1- 2006 083 473

## Description

### FIELD OF THE INVENTION

The present invention relates to an electrowetting device, and in particular to a variable focus liquid lens, in which the focus can be varied by the application of a voltage.

### BACKGROUND OF THE INVENTION

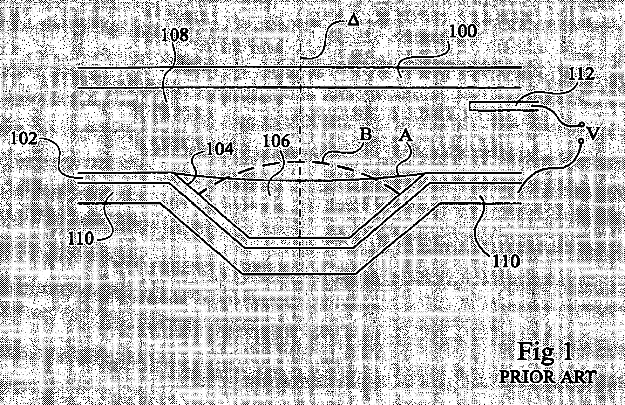

A number of embodiments of variable focus liquid lenses are described in European patent N°1166157. Figure 1 of the present application corresponds to Figure 12 of that patent and illustrates an example of a variable focus liquid lens according to the prior art. As shown in Figure 1, the variable focus liquid lens comprises a fluid chamber with two insulating transparent plates 100 and 102 and an optical axis Δ. Plate 102 comprises a conical or cylindrical recess, with a side face 104 inclined with respect to the optical axis △ of the device, and which receives a drop of a first liquid which is an insulating liquid 106. The remainder of the chamber extending up to transparent plate 100 is filled with a second liquid 108, which is a conducting liquid. The liquids are immiscible, and have different refraction indexes but roughly the same density, forming a refractive interface or meniscus (A, B). A transparent electrode 110 is formed over the outer surface of insulating plate 102. Another electrode 112 is provided in contact with the second liquid 108.

By applying a voltage between electrodes 110 and 112, it is possible, to change the curvature of the interface between the first liquid 106 and the second liquid 108 due to the electrowetting effect, for example, from an initial concave shape as shown by line A, to a convex shape as shown by line B. Thus, rays of light passing through the cell perpendicular to the plates 100 and 102 in the region of the drop 106 will be focused to a greater or lesser extent depending on the voltage applied.

For some applications, for example, in devices in which a high quality image is required, a lens having a relatively large diameter is preferable, for example, greater than 10 mm in diameter. One area needing improvement in liquid lenses of the prior art involves compensation for the difference in dilation between the first and second liquids within a given range of temperature.

### SUMMARY OF THE INVENTION

It is one object of the present invention to provide an electrowetting device and method for manufacturing the same which at least partially addresses the needs described with relation to the prior art.

According to a first aspect of the present invention there is provided a variable focus liquid lens having an optical path through the lens, comprising: a structure comprising first and second electrodes and containing first, second and third immiscible liquids, wherein said first and second liquids form a first refractive interface located in the optical path of the lens and having a variable curvature, wherein said second and third liquids form a second interface moveable with respect to said structure by electrowetting in response to application of a voltage between said first and second electrodes, wherein the curvature of the first interface is variable in response to movement of the second interface, wherein said first and third liquids form a third interface, wherein said second and third interfaces are located outside of the optical path of the lens, and wherein said second interface is fixed with respect to a first surface of said structure, and is moveable with respect to a second surface of said structure.

According to a further aspect of the present invention, there is provided a method varying the focus of a variable focus liquid lens having an optical axis and an optical path through the lens, the lens comprising a chamber comprising first and second electrodes and containing first, second and third immiscible liquids, said first and second liquids forming a first refractive interface located in the optical path of the lens, said second and third liquids forming a second interface, the method comprising: applying a voltage between said first and second electrodes, to produce a selective movement of the second interface with respect to a first surface of said chamber by electrowetting, while maintaining said second interface fixed with respect to a second surface of said chamber, whereby the curvature of the first interface is varied in response to movement of the second interface.

Further objects, features and advantages of the present invention will become apparent from the following detailed description of exemplary preferred embodiments, when considered together with the accompanying figures of drawing.

### BRIEF DESCRIPTION OF THE DRAWINGS

In the drawings:
Figure 1 (already described above) illustrates a known embodiment of a liquid lens comprising liquids that are movable with respect with each other by electrowetting;
Figure 2A illustrates a liquid lens according to a first embodiment of the present invention;
Figure 2B illustrates an underside view of the lens of Figure 2A;
Figure 3A illustrates a liquid lens according to a second embodiment of the present invention;
Figure 3B illustrates an underside view of the lens of Figure 3A;
Figure 4 illustrates a liquid lens according to a third embodiment of the present invention;
Figure 5 is a schematic view showing part of a first optical device having a variable focus lens according to one embodiment of the invention; and
Figure 6 is a schematic view showing a second optical device having a variable focus lens according to one embodiment of the invention.

For clarity, throughout the figures, like reference numbers have been used for corresponding features. The figures are not drawn to scale.

### DETAILED DESCRIPTION OF PREFERRED EMBODIMENTS

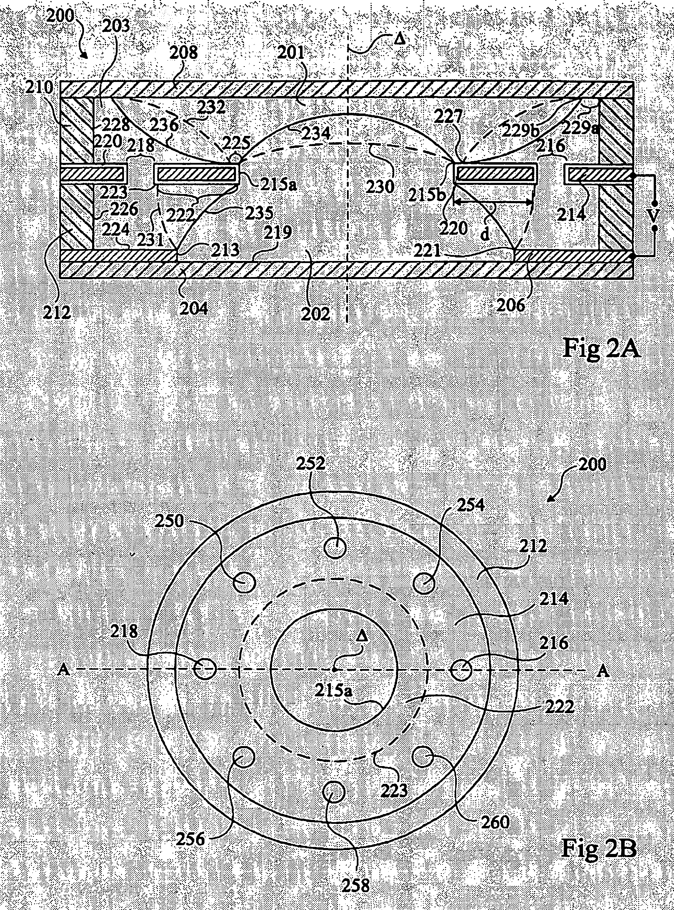

With reference to Figure 2A, a liquid lens according to a first embodiment is shown which comprises a structure containing a first volume of a first liquid 201, a second volume of a second liquid 202, and a third volume of a third liquid 203. The first, second and third liquids are immiscible with each other, in other words, each is immiscible with each of the other two liquids, such that there are three distinct liquid volumes contained in the lens. The liquids preferably have substantially the same density. The third liquid 203 is preferably a conducting liquid, and preferably comprises water containing an electrolyte, such as a salt. The first and second liquids 201, 202 are preferably insulating liquids, and preferably comprise an oil or an oily substance. The first and second liquids 201, 202, can preferably comprise, for example, a phenylated oil and a fluorinated oil respectively. One preferable example of a phenylated oil, is hydrogenated oil. The first and second liquids have different refractive indexes.

The first, second and third liquids are enclosed in a fluid chamber that in one embodiment is formed of a first plate comprising a first transparent planar window 204 and a second plate comprising a second transparent planar window 208. A first electrode 206, which is preferably annular, is positioned parallel to and in contact with the inner surface of the first transparent window 204. Cylindrical side portions 210 and 212 separate electrode 206 and the second transparent window 208.

Electrode 206 comprises an inner edge 213 which is preferably rotationally symmetrical to and substantially parallel to the optical axis Δ of the lens. The inner edge 213 defines the perimeter of an opening in the center of electrode 206 which exposes a region 219 of the inner surface of the first window 204.

The lens also comprises a second electrode 214 which is preferably also annular and is held between the first and second cylindrical portions 210, 212, and it is oriented substantially parallel to the first and second windows 204, 208. Electrode 214 is preferably positioned approximately half-way between the first and second windows 204, 208. Electrode 214 comprises an inner edge 215a that is preferably rotationally symmetrical to and substantially parallel to the optical axis Δ and defines the perimeter of a circular opening in the center of electrode 214. As will be explained in more detail below, the corner 215b between inner edge 215a and the upper surface of electrode 214 in this embodiment provides a means for fixing the outer boundary of a first refractive interface between the first and second liquids 201, 202, thereby ensuring that this first refractive interface is centered about the optical axis Δ.

Electrodes 206, 214 are preferably made of a metal and are thus opaque. The openings in the electrodes, defined by edges 213 and 215a, respectively, thus allow rays of light focused on the lens to pass through the lens along the optical axis, and provide an optical path through the lens having a maximum outer boundary determined by these openings. The opening defined by edge 215a is centered on the optical axis, such that the refractive interface traversing this opening is also centered on the optical axis.

Electrode 214 further comprises a series of passageways, e.g., holes or other structures allowing movement of the third liquid 203 between the lower portion of the lens below electrode 214 and the upper portion above electrode 214. Two such holes are shown in Figure 2A, labelled 216 and 218. Electrode 214 is coated with an insulating layer 220 which insulates it from electrical contact with the third liquid 203.

In order to keep the three liquids in the required positions, the surfaces of the interior of the chamber containing the liquids are preferably treated in such that they are more wettable by one or more of the liquids, and less wettable by the other liquid(s). For example, a base material can be chosen having the required wettability, or a surface treatment can be applied to the base material to give the required wettability. Assuming that the first, second and third liquids 201, 202 and 203 comprise water containing a salt, a fluorinated oil and a hydrogenated oil, respectively, then a surface such as glass or metal will be relatively wettable by the first liquid 201, but less wettable by the second and third liquids 202, 203, i.e., this surface is therefore more hydrophilic. A PTFE (known, for example, as Teflon) coating would be relatively more wettable by the second liquid 202, but less wettable by the first and third liquids 201, 203. A parylene coating would be relatively more wettable by the third liquid 203, but less wettable by the first and second liquids 201, 202. In this specification, when a surface is described as being treated to be more wettable by one of the three liquids, it is to be understood that this surface is also less wettable by at least one of the other liquids bordering this surface, and is preferably less wettable by both of the other two liquids, as is the case for the example surfaces provided above.

Certain areas are preferably treated to be more wettable by the second liquid 202, namely, an annular region 222 on the underside of electrode 214 between the inner edge 215a and an intermediate perimeter 223;the inner edge 215a of electrode 214;the inner edge 213 of electrode 206; and the exposed region 219. An annular region 225 of the top surface of electrode 214 between the corner 215b and an intermediate perimeter 227 is treated such that it is more wettable by the first liquid 201. The underside of the second transparent window 208, except for an outer annular region 229a, is also treated such that it is more wettable by the first liquid 201. Annular region 229a extends between the inner surface 228 of the first cylindrical side portion 210 and a perimeter 229b located radially inwardly of side portion 210.

The other exposed surfaces of the lens in contact with the third liquid 203 are preferably treated such that they are more wettable by the third liquid 203, in other words they are more hydrophilic. This applies to the upper surface 224 of electrode 206, the inner surfaces 226 and 228 of the cylindrical side portions 210 and 212, the annular region 229a of the underside of the second transparent window 208 and the surface of the insulation layer 220 over electrode 214, except for regions 222 and 225 and edge 215a as described above.

Due to the careful control of the quantity of the first, second and third liquids 201 to 203 in the liquid lens and the arrangement and treatment of the inner surfaces of the lens as described, the second liquid 202 forms a drop that in this embodiment always covers the exposed region 219 of the first window, contacts with the edge 213 of electrode 206, contacts with the inner edge 215a of electrode 214 and with at least part of region 222, during normal operation of the lens. The first liquid 201 in this embodiment always contacts with annular region 225 of electrode 214 and with the underside of the second transparent window 208 within perimeter 229b.

First, second and third interfaces are formed between the three liquids 201 to 203, wherein a first refractive interface between the first and second liquids 201, 202 bridges the opening in the center of electrode 214, a second moveable peripheral interface between the second and third liquids 202, 203 is located in the region between electrodes 206, 214, and a third peripheral interface between the first and third liquids 201, 203 is located in the region between electrode 214 and the second transparent window 208.

In operation, a voltage that is preferably an oscillating (AC) voltage is applied between electrodes 214 and 206. For example, such an AC voltage varies in the range 0 V to around 60 V peak to peak. The wettability of the surfaces of electrode 214 by the third liquid 203 is altered as a function of the voltage level.

In a rest state, for example, when a voltage of 0 Volts is applied between the electrodes, the second liquid 202 will contact the whole of region 222 of electrode 214, as this region has been treated to be more wettable by the second liquid 202, discouraging contact with the third liquid 203, which, as described above, is preferably aqueous. In this state the first, second and third interfaces between the liquids are as shown by the dashed lines 230, 231 and 232, respectively, in Figure 2A. Dashed line 230 indicates the first refractive interface bridging the opening defined by the corner 215b of electrode 214. Dashed line 231 indicates the second moveable peripheral interface extending between the corner 221 of electrode 206 and the perimeter 223 located on the underside of electrode 214, at a distance d from edge 215a. The second peripheral interface is fixed to corner 221 partly by the abrupt change in shape of the corner edge and partly by the surface treatment of inner edge 213 and the upper surface 224 of electrode 206, as described above. Use of the term "fixed" in this context throughout the application means that the location of the interface is determined and generally held in position by one or more physical or chemical phenomena, such as shape, surface treatment or any other phenomenon. The third peripheral interface in the rest state is shown by dashed line 232. The third peripheral interface is fixed both to perimeter 229b as a result of surface treatment to the underside of the second transparent window 208, and to perimeter 227 by surface treatments to region 225 and the rest of electrode 214.

When a maximum voltage is applied between the electrodes 206, 214, the wettability of the surface 222 of electrode 214 by the third liquid 203 will be increased, causing the interfaces between the liquids 201, 202, 203 to move, e.g., to positions shown by solid lines 234, 235 and 236. Region 222 is now in contact with the third liquid 203. Solid line 235 indicates the second peripheral interface which has now shifted radially inwardly such that it is between corner 221 and the underside of electrode 214, very close to edge 215a. As shown in Figure 2A, this movement of the second peripheral interface causes the first refractive interface to be deformed or "stretched" to the position indicated by solid line 234. In particular, while in the rest state the second liquid 202 extends only slightly through the opening in electrode 214, such that the first refractive interface 230 has a relatively slight curvature, when a voltage is applied, more of the second liquid 202 is forced through the opening without the edges of the first refractive interface moving. Thus, the curvature of the first refractive interface increases. Due to the different refractive indexes of the first and second liquids 201, 202, light passing through the lens parallel to the optical axis Δ will be diffracted by an amount determined by the curvature of the first refractive interface, and thus variable focusing can be achieved. By varying the applied voltage, the second peripheral interface can be controlled to contact the underside of electrode 214 anywhere between perimeter 223 and edge 215a, and thus the curvature of the first refractive interface can be controlled to be anywhere between the two extremes shown by dashed line 230 and solid line 234. Movement of the second peripheral interface will also cause the third peripheral interface to move to the position indicated by solid line 236. The edges of the third peripheral interface are fixed, however the interface will deform or "stretch" such that the volume of the third liquid 203 remains the same.

In alternative embodiments, the curvature of the first refractive interface in the lens of Figure 2A can be inverted by application of the voltage. For example, in the rest state the first refractive interface can form a curve that dips downwardly toward window 204, and then be moved by application of the voltage to form a curve as indicated by solid line 234.

The holes 216, 218, and other holes and/or passageways not shown in Figure 2A, allow the third liquid 203 to flow between the regions above and below electrode 214 in response to movement of the interfaces.

With reference to Figure 2B, a view of the underside of the lens of Figure 2A is illustrated, with the transparent window 204 and electrode 206 removed. As shown in Figure 2B, the cylindrical side portion 212 and electrode 214 are shown. The dashed line A illustrates the cross-section used for the cross-section view of Figure 2A. The electrode 214 comprises holes 216 and 218 as shown in Figure 2A. Further holes 250, 252, 254, 256, 258 and 260 are preferably provided at regular intervals around electrode 214. Figure 2B also shows edge 215a, and annular region 222 which is centered around the optical axis Δ, extending between edge 215a and perimeter 223.

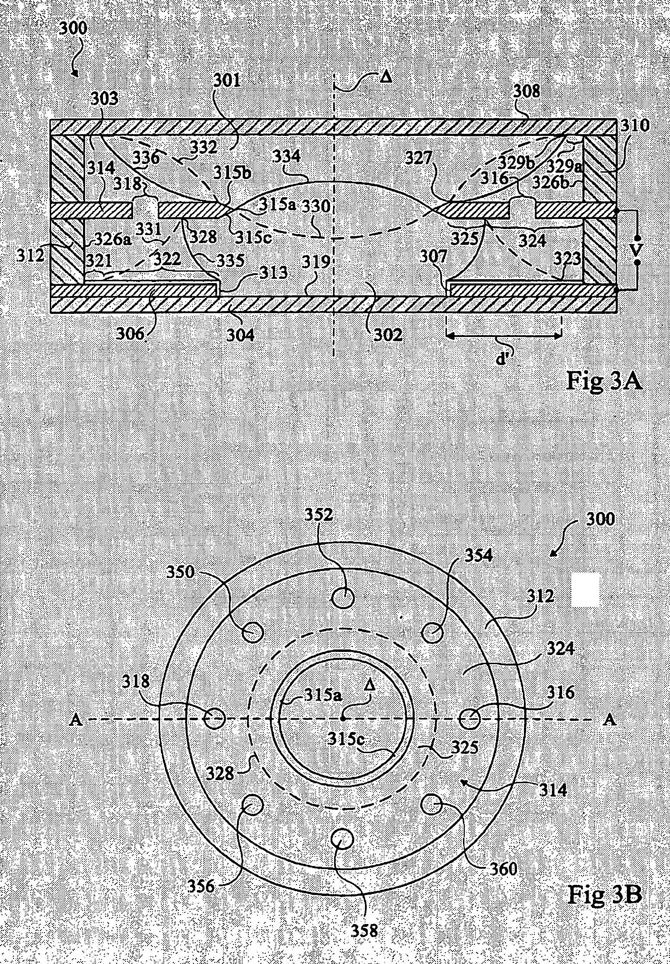

Figure 3A illustrates an alternative embodiment of a liquid lens 300. Again, the liquid lens comprises a structure containing a volume of a first liquid 301, a second liquid 302 and a third liquid 303. In this embodiment, these liquids are the same as the first, second and third liquids 201 to 203 described above and will therefore not be described again in detail.

The liquids 301 to 303 are preferably enclosed in a fluid chamber comprising a first plate comprising a first transparent planar window 304, a first electrode 306, which is preferably annular and is positioned parallel to and in contact with the inner surface of the first window 304, a second plate comprising a second transparent planar window 308, and cylindrical side portions 310 and 312, separating electrode 306 and the second window 308.

Electrode 306 comprises an inner edge 313, which is preferably rotationally symmetrical to and substantially parallel to the optical axis △ of the lens, the inner edge 313 defines the perimeter of an opening in the center of electrode 306. In this second embodiment, electrode 306 is covered with an insulating material 307 to prevent direct contact with the third liquid 303.

Mounted between first and second side portions 310 and 312 is a second electrode 314, which is preferably annular and is arranged to be substantially parallel to electrode 306 and the first and second transparent windows 304, 308. In this second embodiment, electrode 314 is not covered by an insulating layer but makes direct contact with the first liquid 301. Electrode 314 comprises an inner edge 315a which preferably is substantially circular and is centered around the optical axis △ of the lens. In this embodiment, inner edge 315a is also a pointed edge that tapers toward the optical axis Δ. In particular, electrode 314 comprises faces 315b and 315c which are rotationally symmetrical to the optical axis Δ of the lens and are inclined such that their cross-section forms a knife edge pointing toward the optical axis. Faces 315b and 315c meet at pointed inner edge 315a. The incline of each of faces 315b and 315c is sufficient to ensure that the edge of the first refractive interface which contacts inner edge 315a is not displaced during normal operation of the lens. In general, an angle between the faces 315b and 315c of less than 45 degree is preferable. However, an angle between 45 degrees and 90 degrees is sufficient if faces 315b and 315c have different surface wettabilities, such that they are more wettable by the first and second liquids 301, 302, respectively.

Electrodes 306, 314 are preferably made of a metal and are thus opaque. The openings in electrodes 306, 314 defined by edges 313 and 315a, respectively, thus allow light to pass through the lens and provide an optical path through the lens having a maximum outer boundary determined by these openings.

Electrode 314 further comprises a number of holes, two of which are shown in Figure 3A, labelled 316 and 318, allowing the movement of the third liquid 303 between the upper and lower portions of the lens separated by electrode 314.

The preferable surface wettabilities of the inner surfaces of the lens 300 will now be described. The surface or surface treatments to give the required wettability are, for example, those provided in relation to the first embodiment above. An annular region 322 of the surface of the insulating layer 307 over electrode 306 between inner edge 313 and an intermediate perimeter 323 at a distance d' radially outwardly of edge 313 is preferably treated such that it is more wettable by the second liquid 302. Face 315c of electrode 314, an inner region 325 of the underside of electrode 314, between face 315c and perimeter 328, inner edge 313 of electrode 306 and region 319 of the first transparent window 304 are also preferably treated to be more wettable by the second liquid 302. An outer annular region 321 of the surface of the insulation layer 307, between perimeter 323 and the inner surface 326a of the cylindrical side portion 312, is preferably treated such that it is more wettable by the third liquid 303, i.e., it is more hydrophilic. An outer annular region 324 on the underside of electrode 314, between a perimeter 328 and inner surface 326a, is also preferably treated such that it is more wettable by the third liquid, as is the top surface of electrode 314.

Face 315b, and the underside of the second transparent window 208, except for an outer annular region 329a between a perimeter 329b and the inner surface 326b of the second cylindrical side portion 310, are preferably treated such that they are more wettable by the first liquid 301. Region 329a and inner surface 326a and 326b are preferably treated to be more wettable by the third liquid 303.

By careful control of the quantity of the first, second and third liquids 301 to 303 in the liquid lens 300 and as a result of the arrangement and treatment of the inner surfaces of the lens, the second liquid 302 in this embodiment forms a drop that always covers the exposed region 319 of the first window 304, contacts with the edge 313 of electrode 306, contacts with face 315c and region 325 of electrode 314 and is in contact with at least part of region 322 during normal operation of the lens. The first liquid 301 always contacts face 315b of electrode 314, and the underside of the second transparent window within perimeter 329b. Thus, first, second and third interfaces are formed between the three liquids 301, 302,303, namely, a first refractive interface between the first and second liquids 301, 302, bridging the opening in the center of electrode 314 defined by edge 315a, a second moveable peripheral interface between the second and third liquids 302, 303, in the region between electrodes 306, 314, and a third peripheral interface between the first and third liquids 301, 303, in the region between electrode 314 and the second transparent window 308.

Perimeter 328, which preferably is circular and is centered around the optical axis Δ, is thus the border between region 324, which is more wettable by the first liquid 301, and region 325, which is more wettable by the second liquid 302, and thus provides a perimeter to which the edge of the second peripheral interface is fixed. Likewise, the third peripheral interface is fixed to perimeters 327 and 329b.

Operation of this second lens embodiment is similar to the operation of the first embodiment described above. As with the first embodiment, a voltage that is preferably an oscillating (AC) voltage V is applied between electrodes 306, 314. In a rest state, for example, when a voltage of 0 Volts is applied between the electrodes 306, 314, the second liquid 302 will contact the region 322 of electrode 306, as this region has been treated to be more wettable by the second liquid 302, and contact with the third liquid 303 is resisted. Therefore, the first, second and third interfaces between the liquids 301 to 303 will be as shown by the dashed lines 330, 331 and 332, respectively. Dashed line 330 indicates the first refractive interface between the first and second liquids 301, 302, bridging the opening defined by the inner edge 315a of electrode 314. Dashed line 331 indicates the second peripheral interface between the second and third liquids 302, 303, extending between the surface of electrode 306 a distance d' from the inner edge 313, and perimeter 328 on the underside of electrode 314. Dashed line 332 indicates the third peripheral interface between the first and third liquids 301, 303, which extends between electrode 314 and the second transparent window 308.

When a maximum voltage is applied between electrodes 306, 314, the wettability of the region 322 of electrode 306 by the third liquid 303 is increased, causing the interfaces between the first, second and third liquids 301 to 303 to move to positions shown by solid lines 334, 335 and 336. Region 322 is now in contact with the third liquid 303. Solid line 335 indicates the second peripheral interface which has now shifted such that it is between a point close to edge 313 of electrode 306 and the perimeter 328 on the underside of electrode 314. This movement of the second peripheral interface causes the first refractive interface, indicated by solid line 334, to move. According to this second embodiment, when it is in the rest state, the first refractive interface forms a curve that dips downwardly towards the first window 304, as shown by dashed line 330. However, when the maximum voltage is applied, the curvature of the first refractive interface is inverted, such that the first refractive interface curves upwardly towards the second window 308. The lens can therefore be transformed from having the properties of a convex lens to the properties of a concave lens, or vice versa, depending on the respective refractive indexes of the first and second liquids. By varying the applied voltage, the second peripheral interface can be controlled to contact the surface of electrode 306 between perimeter 323 and edge 313, and thus the curvature of the first refractive interface can be controlled to be anywhere between the two extremes shown by dashed line 330 and solid line 334.

Movement of the second peripheral interface will also cause the third peripheral interface to move to the position indicated by solid line 336. The edges of the third peripheral interface are fixed; however the interface will deform or "stretch" such that the volume of the third liquid 303 remains the same.

Figure 3B illustrates a view of the underside of lens 300 with the transparent window 304 and electrode 306 removed. Electrode 314 is shown having a series of holes including holes 318 and 316 which are shown in Figure 3A. Further holes 350, 352, 354, 356, 358 and 360 are also preferably provided, at regular intervals around electrode 314. The face 315c and inner region 325 having an outer perimeter 328 are shown on the underside of electrode 314, these regions being treated such that they are more wettable by the second liquid 302. The rest of the underside of the electrode 314, indicated as region 324, is treated such that it is more wettable by the third liquid 303. In this way, the interface between the two liquids is fixed to perimeter 328.

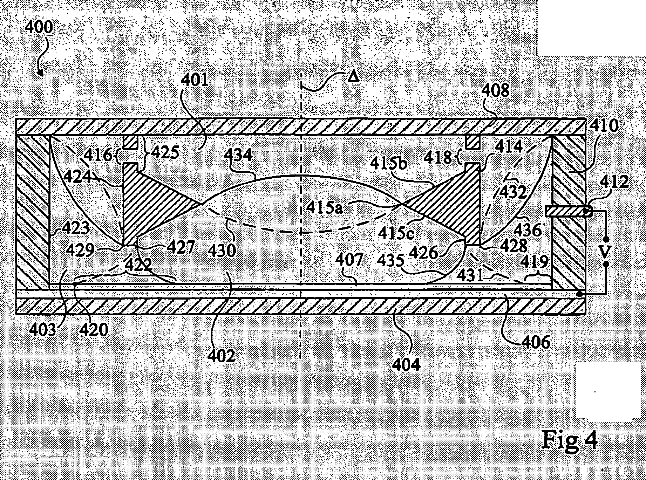

Figure 4 illustrates an alternative embodiment of a liquid lens 400. Again, the liquid lens comprises a structure containing a volume of a first liquid 401, a second liquid 402 and a third liquid 403. These liquids are preferably the same as the first, second and third liquids 201 to 203, and 301 to 303, described above and will therefore not be described again in detail.

The liquids 401 to 403 are enclosed in a chamber comprising a first plate comprising a first transparent planar window 404; a first transparent electrode 406 that is positioned parallel to and covers the inner surface of the first window 404 and that is covered by an insulating layer 407 preventing contact with the liquids; a second plate comprising a second transparent preferably planar window , and a cylindrical side portion 410 separating the first transparent electrode 406 and the second window 408. The first transparent electrode 406 is preferably made of a very thin layer of conducting material. A second electrode 412 is preferably made of metal in the form of a pin, and is provided inserted in a hole through the cylindrical side portion 412, such that it makes contact with the third liquid 403.

An annular support 414 is provided in the lens, for example, glued or otherwise fixed to the underside of the second transparent window 408. The annular support preferably extends from the second transparent window 308 partially across the thickness of the lens toward the first transparent window 304. Annular support 414 preferably comprises a substantially cylindrical section approximately parallel to the optical axis Δ and an annular protrusion extending from the inner surface of the substantially cylindrical section toward the optical axis Δ of the lens. The annular protrusion is preferably substantially triangular in cross-section, and comprises an inner edge 415a which is preferably substantially circular and centered around the optical axis Δ of the lens. It has faces 415b and 415c which are preferably annular faces meeting at edge 415a, each inclined with respected to the optical axis △ such that edge 415a is pointed toward the optical axis △. A first refractive interface between the first and second liquids 401, 402 is fixed to edge 415a. The incline of each of faces 415b and 415c is preferably sufficient to ensure that the edge of the first refractive interface is not displaced during normal operation of the lens. In general, an angle between the faces 415b and 415c of less than 45 degree is preferable. However, an angle between 45 degrees and 90 degrees is sufficient, if faces 415b and 415c have different surface wettabilities, such that they are more wettable by the first and second liquids 401, 402, respectively.

The annular support 414 comprises a number of passages, e.g., holes, two of which are shown in Figure 4, labelled 416 and 418, allowing the movement of the first liquid 401 between areas outside and inside the annular support 414.

In a similar fashion to the embodiments of Figures 2A and 3A, the inner surfaces of the chamber containing the liquids 401, 402, 403 are preferably treated such that they are more wettable by one or more of the liquids, and less wettable by the other liquid(s). For example, the inner surfaces preferably comprise the same materials as these described in relation to Figure 2A.

The inner surface of the insulating layer 407 is preferably treated to be more wettable by the second liquid 402, except for a radially outer annular region 419 of this surface between an intermediate perimeter 420 and the inner surface 423 of the cylindrical side portion 410, which is preferably treated to be more wettable by the third liquid 403. The inner surface of the second transparent window 408 is preferably treated to be more wettable by the first liquid 401. The outer surface 424 of the annular support 414, an radially inner region 425 of the annular support 414 between the transparent window 408 and the face 415b, and face 415b, are preferably treated to be more wettable by the first liquid 401. Face 415c and an annular region 426 of the inner surface of the annular support 414 substantially parallel to the optical axis Δ and between the edge of face 415c and a corner 427 at the bottom edge of the annular support are preferably treated to be more wettable by the second liquid 402. The end surface 428 of the annular support 414, which is an annular surface substantially perpendicular to the optical axis Δ, and extends between corner 427 and a further corner 429, is preferably treated to be more wettable by the third liquid 403. Corner 429 is the corner between end surface 428 and the radially outer surface 424 of the annular support 414

By carefully controlling the quantity of the first, second and third liquids 401 to 403 in the liquid lens 400 and due to the arrangement and treatment of the inner surfaces of the lens, the second liquid 402 preferably forms a drop that always covers a central region of the surface of insulating layer 407, that contacts with corner 427, that covers annular region 426 and face 415C of the annular support 414 and that also contacts edge 415a, during normal operation of the lens. The first liquid 401 preferably always contacts face 415b and the radially inner region 425, as well as the radially outer surface 424 of the annular support 414 and the inner surface of the second transparent window 408. The third liquid 403 preferably always covers the outer annular region 419 of the surface of the insulating layer 407, and the inner surface 423 of the cylindrical side portion 410. Thus, first, second and third interfaces are formed between the three liquids 401 to 403, namely, a first refractive interface between the first and second liquids 401, 402, bridging the opening in the center of the annular support 414 defined by edge 415a, a second moveable peripheral interface between the second and third liquids 402, 403, in the region between the annular support 414 and the transparent electrode 406, and a third peripheral interface between the first and third liquids 401, 403, in the region between corner 429 and the corner between the inner surface 423 of the cylindrical side portion 410 and second transparent window 308.

The second moveable peripheral interface in this embodiment is fixed at one edge to corner 427. This edge could be fixed by the abrupt change in shape of the corner 427 alone, but is preferably also fixed by the treatment of regions 426 and 428 as described above. The other edge of the second moveable peripheral interface is moveable by electrowetting with respect to the insulating layer 407.

The third peripheral interface in this embodiment is fixed by both the shape and surface treatment at both edges which contact the annular support 414 and the second transparent window 408, respectively. In alternative embodiments it could be fixed by just one these means.

Operation of this third lens embodiment is similar to the operation of the first and second embodiments described above and will therefore be only briefly described.

In a rest state, when no oscillating (AC) voltage V is applied between the first transparent electrode 406 and electrode 412, for example, when a voltage of 0 Volts is applied, the second liquid 402 will contact the inner surface of insulating layer 407, except for region 419, which is more wettable by the third liquid. The first, second and third interfaces between the liquids will therefore be as shown by the dashed lines 430, 431 and 432, respectively.

When a maximum voltage is applied between the transparent electrode 406 and electrode 412, the wettability of the surface of the insulating layer 407 by the third liquid 403 will increase, causing the third liquid to contact a region 422 of the insulating layer 407, between perimeter 420 and an inner perimeter radially inwardly in the direction towards the optical axis Δ. This causes the interfaces between the first, second and third liquids 401 to 403 to move to positions shown by solid lines 434, 435 and 436. According to this third embodiment, when it is in the rest state, the first refractive interface forms a curve that dips downwardly towards the first window 404, as shown by dashed line 430. However, when the maximum voltage is applied, the curvature of the first refractive interface is inverted, such that the first refractive interface curves upwardly towards the second window 408. Thus, as with the second embodiment, lens 400 can therefore be transformed from having the properties of a convex lens to the properties of a concave lens, or vice versa, depending on the respective refractive indexes of the first and second liquids 401, 402.

By varying the applied voltage, the second peripheral interface can be controlled to contact the surface of the insulating layer 407 between perimeter 420 and the position shown by solid line 435, and thus the curvature of the first refractive interface can be controlled to be anywhere between the two extremes shown by dashed line 430 and solid line 434.

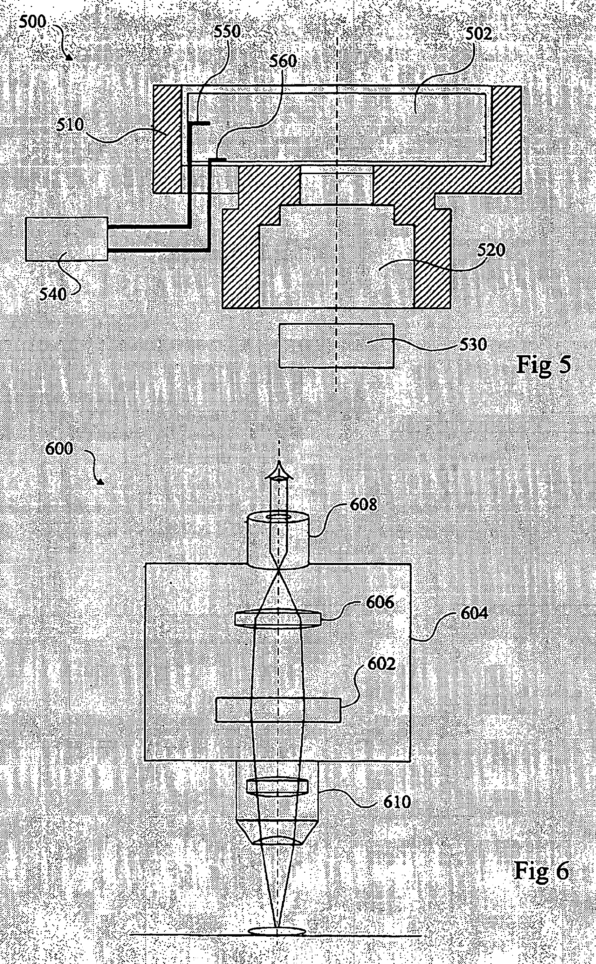

Figure 5 schematically illustrates one example of an optical device 500 incorporating the lens 502 of variable focal length according to the present invention, for example, one of the first or second embodiments of Figures 2A, 2B and 3A, 3B. The optical device comprises a mount 510 that preferably holds the variable focus lens 502 and a group 520 of fixed lenses. The device preferably further comprises a control block 540 for controlling the lens 502, the control block 540 being connected to the electrodes of the lens 502 through the connections 550, 560. An optical sensor array 530 is preferably provided for capturing images received via the lenses 502 and 520.

The optical device 500 can be incorporated in a large variety of systems in which there is a need for variable focal length optical devices, such as, for example, mobile phones, endoscope systems, barcode readers, personal digital organisers, etc.

Figure 6 illustrates a high quality optical device, in this example, a microscope, incorporating a lens 602 of variable focal length according to the present invention, for example, one of the first or second embodiments of Figures 2A, 2B and 3A, 3B respectively. The variable focus lens 602 is preferably included in a lens module 604 of the device that preferably further comprises one or more fixed lenses or lens groups 606. The microscope preferably comprises an ocular 608 providing the eye piece of the microscope, and an objective 610 that first receives the image of the object being viewed by the microscope. The lens module 604 is positioned so as to be aligned with the optical axis of the device, between the ocular 608 and the objective 610.

In general, an optical device comprising a variable focus liquid lens according to the embodiments described herein could comprise a large range of devices, such as, infrared devices for observing and/or capturing light in the infrared range, for example night-vision goggles, digital cameras, film cameras and disposable cameras for visible light, microscopes, endoscopes, or other optical apparatus, particularly where high image quality is required. Furthermore, such optical devices could comprise optical devices for providing a laser beam, and in particular an infrared laser beam.

Thus, a liquid lens has been described in which a first moveable refractive interface, traversing an optical path through the lens, and arranged between two liquids of different refractive indexes, provides a variable lens. The edges of this interface are fixed. A second peripheral interface outside the optical path of the lens is moved to vary focusing of the lens, and by providing a third peripheral interface a tri-liquid lens is possible in which neither of the liquids forming the first interface need to be conductive. For example, as described above, in preferred embodiments the first and second liquids 201, 301 and 202, 302 are oily liquids. This allows a larger range of possible ratios between the refractive indexes of the first and second liquids, while maintaining approximately matched densities. Furthermore, when two oily liquids are used for the first and second liquids, the difference in their expansion due to temperature changes will be less, and therefore larger lenses, or lenses that can operate over a larger temperature range are possible. Furthermore, water tends to absorb infrared light, and thus by providing the refractive interface between two oily liquids, rather than water and oil, the variable focus liquid lenses according to the embodiments described herein can be used in infrared devices, for example, for wavelengths of more than 1500 nm. The variable focus lenses can also be used in UV lenses.

A further advantage of the embodiments described herein is that the edge of the meniscus providing the refractive interface of the lenses can be fixed, and this improves image quality of the lens by reducing deformation of the meniscus caused by movement of the edge of this interface, which can happen in embodiments such as that shown in Figure 1.

Advantageously, in the embodiments described herein, one edge of the second peripheral interface is fixed to a first inner surface of the lens, while a second edge is moveable with respect to a second inner surface of the lens. In order to provide a lens having a meniscus having reasonable variations in curvature, as well as keeping the lens as compact as possible, a moveable interface is provided of a relatively large area, and in order to allow this interface to be controlled, one edge of the interface is advantageously fixed.

Furthermore, a compact lens design is achieved according to embodiments described herein by moving the second interface in a direction substantially parallel to a plane perpendicular to the optical axis of the lens. For example, embodiments have been described in which the second interface is moveable in a direction radially outwardly from the optical axis Δ of the lens. Furthermore, a compact design of the lens is possible by providing the movable interface encircling the optical axis △ of the lens or the optical path through the lens, and being radially outwardly of the first refractive interface. This arrangement means that the moveable interface is able to have a relatively large surface area, and thus generate large movements of the refractive interface, without requiring a lot of space.

Furthermore, this design of the liquid lens having an annular disc-shaped support for the first liquid interface allows a very thin lens to be produced, as space along the optical axis of the lens is optimized. This is advantageous in many applications, such as mobile telephones, since keeping the lens as small as possible is a key requirement, particularly the thickness of the lens along the optical axis.

Advantageously the variable liquid lens comprises the electrode 214, 314, which is preferably annular and disc-shaped and thus is easy to manufacture and assemble. In particular, it advantageously comprises no complicated parts.

Due to the arrangement of the lens and the interfaces, electrode 206, 306 can comprise an opening and thus no electrode is required across the optical path of the lens. This arrangement is most preferable, since it results in reduced degradation of the light passing through the lens, when compared to using a transparent electrode. In alternative embodiments, for example, as shown in the embodiment of Figure 4, a transparent electrode can be provided across the optical path of the lens, without substantially detracting from the other advantages of the invention.

The dimensions of the lens will depend on the specific requirements of the lens, but as an example, the lens could have a diameter in the range of 5 to 40 mm and a spacing between the first and second transparent windows of between 2 and 10 mm. The diameter of the openings in the first and/or second electrodes 206, 214, 306, 314 can be, for example, in the range of 2 to 30 mm. In particular, the spacing between each transparent window and electrode 214, 314 in each embodiment can be, for example, approximately 0.5 to 4 mm. Electrode 206, 306 can be, for example, between approximately 0.2 and 1 mm thick.

In embodiments of the present invention, the stability of the liquids in the lens is improved by providing a relatively large contact surface between the second liquid 202, 302, and electrode 214, 314. In the embodiment of Figure 2A, this contact area is greatest when the lens is in the rest position, as shown by dashed lines 230. In the embodiment of Figure 3A, this contact area is region 325 and face 315c, which is of a fixed size, and in alternative embodiments the contact area could be increased further by moving the perimeter 328, which contacts the second peripheral interface, radially outwardly toward the side portion 312.

Advantageously, an inversion of the refractive interface between the liquids is possible in the embodiments of the invention. Inversion of the interface implies a large change in the contact angle between the refractive interface and the inner edge of electrode 214, 314. The risk of displacement of the refractive interface from its fixed position at inner edge 315a, 415a is advantageously minimized by providing a pointed edge that points toward the optical axis Δ. The pointed inner edge 315a also serves to minimize distortions in the lens curvature.

By providing a support and centering means for the refractive interface that also functions as an electrode in some embodiments, no separate electrode need be provided. Furthermore, due to the arrangement of the electrodes, the external edge of the second annular electrode 214, 314 is accessible from outside of the lens, such that electrical connection thereto is easily achieved.

By providing a third interface having fixed edges, a damping effect is achieved during movement of the liquids, helping to achieve precise control of the interfaces.

While, a number of specific examples of lens embodiments have been described herein, there are numerous variations and alternative forms that can be constructed. For example, while particular examples for the liquids have been provided, many other compositions and/or combinations of liquids are possible. It is only necessary that the liquids selected for the first and second liquids 201, 301, 202, 302, are immiscible, and of approximately the same density to avoid undesired movement of the liquids. It is also necessary that there is a moveable interface between an insulating liquid and a conducting liquid, such that it is controllable by electrowetting.

While preferred embodiments have been described in which only the second of the three interfaces between the liquids is directly moveable by electrowetting, in alternative embodiments both the second and third interfaces could be directly moveable by electrowetting. For example, with reference to the embodiment of Figure 2A, a region more wettable by the first liquid 201 could be added to the top surface of electrode 214, such that the contact perimeter 227 of the third interface is moveable between corner 215b and a distance d radially outwardly from the corner 215b on the top surface of electrode 214.

While the outer casing of the lens provided by first and second cylindrical side portions 210, 310 or cylindrical side portion 410 has been described as being annular, alternative shapes are possible. Furthermore, while a number of holes 216, 218, 316, 318, 416, 418 have been described, in alternative embodiments these holes can be provided in different configurations, arrangements, and shapes, as long as the function of providing communication for the liquid(s) is accomplished.

In some embodiments electrode 314 of Figure 3A could be replaced by an annular support means, e.g., which is the same shape electrode 314, but need not be of a conducting material. In this case a further electrode is provided, for example, similar to pin 412 of Figure 4.

The liquid lenses of Figures 2A, 3A and 4 comprise first and second transparent windows 204, 304, 404, 208, 308, 408, which in the embodiments described are planar windows. In alternative embodiments these windows could be of a non-planar shape, such as convex, concave, planar-concave or planar convex lenses. The transparent windows are preferably formed of glass. In alternative embodiments, these windows could be mounted in a housing, for example, of metal, fixed to respective cylindrical side portions 210, 212 310, 312, 410, or forming part of the cylindrical side portions.

While the interfaces in the embodiments described are fixed at one or both edges by the shape of the inner edge of the chamber, for example, a corner edge, and/or by a difference in surface wettability, either of these phenomena alone can be used to fix any of the interfaces.

The terms "upper" and "lower" or similar directional terms that may be used in this application are employed solely for the purpose of providing a better understanding of the structures depicted in the figures. The lenses according to the invention can be oriented in any desired manner, without affecting their normal function or operation.

Having thus described at least one illustrative embodiment of the invention, various alterations, modifications and improvements will readily occur to those skilled in the art. Such alterations, modifications and improvements are intended to be within the scope of the invention. Accordingly, the foregoing description is by way of example only and is not intended to be limiting. The invention is limited only as defined in the following claims and the equivalent thereto.

## Claims

1. A variable focus liquid lens having an optical path through the lens, comprising:
a structure comprising first and second electrodes (306, 314, 406, 414) and containing first, second and third immiscible liquids (201-203; 301-303; 401-403), wherein said first and second liquids form a first refractive interface (230, 234, 330, 334, 430, 434) located in the optical path of the lens and having a variable curvature, wherein said second and third liquids form a second interface (231, 235, 331, 335, 431, 435) moveable with respect to said structure by electrowetting in response to application of a voltage between said first and second electrodes, wherein the curvature of the first interface is variable in response to movement of the second interface, wherein said first and third liquids form a third interface (232, 236, 332, 336, 432, 436), wherein said second and third interfaces are located outside of the optical path of the lens, and wherein said second interface is fixed with respect to a first surface of said structure, and is moveable with respect to a second surface (222, 322) of said structure.

2. The variable focus liquid lens of claim 1, wherein said second interface is moveable in a direction parallel to a plane perpendicular to the optical path through the lens.

3. The variable focus liquid lens of claim 1, wherein said second interface encircles the optical path of the lens and is located radially outwardly of said first refractive interface.

4. The variable focus liquid lens of claim 1, wherein said third interface contacts at least two surfaces of said structure, and wherein said third interface is fixed to both of said at least two surfaces.

5. The variable focus liquid lens of claim 1, wherein said structure further comprises first and second transparent windows (204, 304, 208, 308, 404, 408) facing each other, and said lens further comprises a centering element (214, 314, 414) which is arranged between the first and second windows and which comprises an opening, wherein the first interface traverses the opening, wherein the edge of the first interface is fixed to one edge (215a, 315a, 415a) of the opening, and wherein the second interface is moveable by electrowetting with respect to one of a surface of said centering element and a surface of said structure.

6. The variable focus liquid lens of claim 5, wherein the edge of the opening comprises a pointed edge (315a, 415a) pointing toward the center of the opening.

7. The variable focus liquid lens of claim 5, wherein said centering element comprises an annular shape.

8. The variable focus liquid lens of claim 5, wherein said centering element is disc-shaped.

9. The variable focus liquid lens of claim 5, wherein the centering element comprises said first electrode.

10. The variable focus liquid lens of claim 5, wherein said third liquid (203, 303) comprises a conducting liquid, said centering element comprises an insulating surface layer preventing electrical contact with said third liquid, and wherein said second interface is moveable by electrowetting with respect to said insulating surface of said centering element and is fixed to a surface of said structure.

11. The variable focus liquid lens of claim 1, wherein said first and second liquids comprise insulating liquids and said third liquid comprises a conducting liquid.

12. The variable focus liquid lens of claim 1, wherein each of said first, second and third liquids comprises one of:
an aqueous solution;
a phenylated oil;
a fluorinated oil; and
a hydrogenated oil.

13. The variable focus liquid lens of claim 5, wherein said centering element comprises at least one passageway (216, 316, 416) allowing one of said first and second liquids to pass through said centering element.

14. An image capturing optical device comprising:
an image sensor (530);
a control block(540); and
a lens arrangement comprising at least one fixed lens (520) and a variable focus liquid lens according to any preceding claim.

15. An infrared device comprising a variable focus liquid lens according to any of claims 1 to 13 wherein said first and second liquids comprise oily liquids suitable for light having a wavelength of more than 1500 nm.

16. A microscope comprising:
an ocular (608);
an objective (610); and
a lens arrangement comprising at least one fixed lens (606) and a variable focus liquid lens according to any of claims 1 to 13.

17. A method of varying the focus of a variable focus liquid lens having an optical path through the lens, the lens comprising a chamber comprising first and second electrodes (306, 314, 406, 414) and containing first, second and third immiscible liquids (201-203; 301-303; 401-403), said first and second liquids forming a first refractive interface (230, 234, 330, 334, 430, 434) located in the optical path of the lens, said second and third liquids forming a second interface (231, 235, 331, 335, 431, 435), the method comprising:
applying a voltage between said first and second electrodes, to produce a selective movement of the second interface with respect to a first surface (222, 322) of said chamber by electrowetting, while maintaining said second interface fixed with respect to a second surface of said chamber, whereby the curvature of the first interface is varied in response to movement of the second interface.

## Patentansprüche

1. Flüssiglinse mit variabler Brennweite mit einem optischen Lichtweg durch die Linse, umfassend:
einen Aufbau, der erste und zweite Elektroden (306, 314, 406, 414) umfaßt und der erste, zweite und dritte unmischbare Flüssigkeiten (201-203; 301-303; 401-403) enthält, wobei die ersten und zweiten Flüssigkeiten eine erste lichtbrechende Grenzfläche (230, 234, 330, 334, 430, 434) bilden, die in dem optischen Lichtweg der Linse angeordnet ist und eine veränderliche Krümmung aufweist, wobei die zweiten und dritten Flüssigkeiten eine zweite Grenzfläche (231, 235, 331, 335, 431, 435) bilden, die bezüglich des Aufbaus beweglich ist durch Elektrobenetzung als Antwort auf das Anlegen einer Spannung zwischen den ersten und zweiten Elektroden, wobei die Krümmung der ersten Grenzfläche je nach der Bewegung der zweiten Grenzfläche veränderlich ist, wobei die ersten und dritten Flüssigkeiten eine dritte Grenzfläche (232, 236, 332, 336, 432, 436) bilden, wobei die zweite und die dritte Grenzfläche außerhalb des optischen Lichtweges der Linse angeordnet sind, und wobei die zweite Grenzfläche hinsichtlich einer ersten Oberfläche des Aufbaus fest und hinsichtlich einer zweiten Oberfläche (222, 322) des Aufbaus beweglich ist.

2. Flüssiglinse mit variabler Brennweite nach Anspruch 1, wobei die zweite Grenzfläche in einer Richtung, die parallel zu einer zu dem optischen Lichtweg durch die Linse senkrechten Fläche ist, beweglich ist.

3. Flüssiglinse mit variabler Brennweite nach Anspruch 1, wobei die zweite Grenzfläche den optischen Lichtweg der Linse umgibt und sich radial außerhalb der ersten lichtbrechenden Grenzfläche befindet.

4. Flüssiglinse mit variabler Brennweite nach Anspruch 1, wobei die dritte Grenzfläche mindestens zwei Oberflächen des Aufbaus berührt, und wobei die dritte Grenzfläche an den beiden der mindestens zwei Oberflächen befestigt ist.

5. Flüssiglinse mit variabler Brennweite nach Anspruch 1, wobei der Aufbau weiterhin erste und zweite durchscheinende Fenster (204, 304, 208, 308, 404, 408), die einander gegenüber sind, umfaßt, und wobei die Linse weiterhin ein zentrierendes Element (214, 314, 414), welches zwischen den ersten und zweiten Fenstern angebracht ist und welches eine Öffnung umfaßt, umfaßt, wobei die erste Grenzfläche die Öffnung durchquert, wobei der Rand der ersten Grenzfläche an einem Rand (215a, 315a, 415a) der Öffnung befestigt ist, und wobei die zweite Grenzfläche durch Elektrobenetzung bezüglich einer der Oberflächen des zentrierenden Elements und einer Oberfläche des Aufbaus beweglich ist.

6. Flüssigline mit variabler Brennweite nach Anspruch 5, wobei der Rand der Öffnung eine Spitze (315a, 415a), die in die Mitte der Öffnung zeigt, umfaßt.

7. Flüssiglinse mit variabler Brennweite nach Anspruch 5, wobei das zentrierende Element eine Ringform aufweist.

8. Flüssiglinse mit variabler Brennweite nach Anspruch 5, wobei das zentrierende Element eine Scheibenform aufweist.

9. Flüssiglinse mit variabler Brennweite nach Anspruch 5, wobei das zentrierende Element die erste Elektrode umfaßt.

10. Flüssiglinse mit variabler Brennweite nach Anspruch 5, wobei die dritte Flüssigkeit (203, 303) eine leitende Flüssigkeit umfaßt, das zentrierende Element eine isolierende Oberflächenschicht umfaßt, die elektrischen Kontakt mit der dritten Flüssigkeit verhindert, und wobei die zweite Grenzfläche durch Elektrobenetzung bezüglich der isolierenden Oberfläche des zentrierenden Elements beweglich ist und an einer Oberfläche des Aufbaus befestigt ist.

11. Flüssiglinse mit variabler Brennweite nach Anspruch 1, wobei die erste und die zweite Flüssigkeit isolierende Flüssigkeiten umfassen und die dritte Flüssigkeit eine leitende Flüssigkeit umfaßt.

12. Flüssiglinse mit variabler Brennweite nach Anspruch 1, wobei jede der ersten, zweiten und dritten Flüssigkeiten eines von
einer wäßrigen Lösung;
einem phenylierten Öl;
einem fluorierten Öl; und
einem hydrierten Öl
umfaßt.

13. Flüssiglinse mit variabler Brennweite nach Anspruch 5, wobei das zentrierende Element mindestens einen Durchlaß (216, 316, 416) umfaßt, der es einer der ersten oder zweiten Flüssigkeiten erlaubt, durch das zentrierende Element zu strömen.

14. Optisches Bildaufnahmegerät, umfassend:
einen Bilddetektor (530);
eine Kontrolleinheit (540); und
eine Linsenanordnung, die mindestens eine feste Linse (520) und eine Flüssiglinse mit variabler Brennweite nach einem der vorstehenden Ansprüche umfaßt.

15. Infrarotgerät, das eine Flüssiglinse mit variabler Brennweite nach einem der Ansprüche 1 bis 13 umfaßt, wobei die ersten und zweiten Flüssigkeiten ölige Flüssigkeiten umfassen, die für Licht mit einer Wellenlänge von mehr als 1500 nm geeignet sind.

16. Mikroskop, umfassend:
ein Okular (608);
ein Objektiv (610); und
eine Linsenanordnung, die mindestens eine feste Linse (606) und eine Flüssiglinse mit variabler Brennweite nach einem der vorstehenden Ansprüche umfaßt.

17. Verfahren zum Variieren der Brennweite einer Flüssiglinse mit variabler Brennweite mit einem optischen Lichtweg durch die Linse, die Linse umfassend eine Kammer, die erste und zweite Elektroden (306, 314, 406, 414) umfaßt und die erste, zweite und dritte unmischbare Flüssigkeiten (201-203; 301-303; 401-403) enthält, wobei die ersten und zweiten Flüssigkeiten eine erste lichtbrechende Grenzfläche (230, 234, 330, 334, 430, 434) bilden, die in dem optischen Lichtweg der Linse angeordnet ist, wobei die zweiten und dritten Flüssigkeiten eine zweite Grenzfläche (231, 235, 331, 335, 431, 435) bilden, das Verfahren umfassend:
Anlegen einer Spannung zwischen den ersten und zweiten Elektroden, um durch Elektrobenetzung eine gewählte Bewegung der zweiten Grenzfläche bezüglich einer ersten Oberfläche (222, 322) der Kammer zu erzeugen, während die zweite Grenzfläche bezüglich einer zweiten Oberfläche der Kammer feststeht, wobei die Krümmung der ersten Grenzfläche je nach der Bewegung der zweiten Grenzfläche verändert wird.

## Revendications

1. Une lentille liquide à focale variable ayant un passage optique pour des faisceaux lumineux, comprenant:
une structure comprenant une première et une seconde électrodes (306, 314, 406, 414) et contenant un premier, un second et un troisième liquide immiscibles (201-203 ; 301-303 ; 401-403), ans laquelle lesdits premier et second liquides forment une première interface de réfraction (230, 234, 330, 334, 430, 434) située dans le passage optique de la lentille et ayant une courbure variable, dans laquelle lesdits second et troisième liquides forment une seconde interface (231, 325, 331, 335, 431, 435) se déplaçant respectivement à ladite structure par électromouillage en réponse à l'application d'une tension électrique entre lesdites première et seconde électrodes, dans laquelle la courbure de la première interface se déplace en réponse au déplacement de la deuxième interface, dans laquelle lesdits premier et troisième liquides forment une troisième interface (232, 236, 332, 336, 432, 436), dans laquelle lesdites deuxième et troisième interfaces se situent en dehors du passage optique de la lentille, et dans laquelle ladite seconde interface est fixée à une première surface de ladite structure, et se déplace par rapport à une seconde surface (222, 322) de ladite structure.

2. La lentille liquide à focale variable selon la revendication 1, dans laquelle ladite seconde interface se déplace dans une direction parallèle à un plan perpendiculaire au passage optique passant à travers la lentille.

3. La lentille liquide à focale variable selon la revendication 1, dans laquelle ladite seconde interface encercle le passage optique de la lentille et est situé radialement vers l'extérieur à partir de ladite première interface de réfraction.

4. La lentille liquide à focale variable selon la revendication 1, dans laquelle ladite troisième interface est en contact avec au moins deux surfaces de ladite structure, et dans laquelle ladite troisième interface est fixée à ces deux surfaces au moins.

5. La lentille liquide à focale variable selon la revendication 1, dans laquelle ladite structure comprend en outre une première et une seconde fenêtres transparentes (204, 304, 208, 308, 404, 408) se faisant face l'une à l'autre, ladite lentille comprenant en outre un élément de centrage (214, 314, 414) se situant entre les première et deuxième fenêtres et qui comprend une ouverture, où la première interface traverse l'ouverture, où le bord de la première interface est fixé à un bord (215a, 315a, 415a) de l'ouverture, et où la deuxième interface se déplace par électromouillage par rapport à une surface de l'élément de centrage ou une surface de ladite structure.

6. La lentille liquide à focale variable selon la revendication 5, dans laquelle le bord de l'ouverture comprend une arête aiguisée (315a, 415a) dirigée vers le centre de l'ouverture.

7. La lentille liquide à focale variable selon la revendication 5, dans laquelle ledit élément de centrage comprend une forme annulaire.

8. La lentille liquide à focale variable selon la revendication 5, dans laquelle ledit élément de centrage a une forme de disque.

9. La lentille liquide à focale variable selon la revendication 5, dans laquelle ledit élément de centrage comprend ladite première électrode.

10. La lentille liquide à focale variable selon la revendication 5, dans laquelle ledit troisième liquide (203, 303) comprend un liquide conducteur, ledit élément de centrage comprend une surface isolante empêchant un contact électrique avec ledit troisième liquide, et dans laquelle ladite deuxième interface se déplace par éléctromouillage par rapport à cette surface isolante dudit élément de centrage et est fixée à une surface de ladite structure.

11. La lentille liquide à focale variable selon la revendication 1, dans laquelle lesdits premier et second liquides comprennent des liquides isolants et ledit troisième liquide comprend un liquide conducteur.

12. La lentille liquide à focale variable selon la revendication 1, dans laquelle chacun desdits premier, second et troisième liquides comprennent un des liquides suivants :
une solution aqueuse ;
une huile phénylée ;
une huile fluorée ; et
une huile hydrogénée.

13. La lentille liquide à focale variable selon la revendication 5, dans laquelle ledit élément de centrage comprend au moins un passage (216, 316, 416) permettant à l'un des premier et deuxième liquides de passer à travers cet élément de centrage.

14. Un dispositif optique de capture d'images comprenant :
un capteur d'images (530) ;
un élément de contrôle (540) ; et
un arrangement de lentilles comprenant au moins une lentille fixe (520) et une lentille liquide à focale variable selon l'une des revendications précédentes.

15. Un dispositif infrarouge comprenant une lentille liquide à focale variable selon l'une des revendications 1 à 13, dans lequel lesdits premier et second liquides comprennent des liquides huileux adaptés à une lumière de longueur d'onde de plus de 1500 nm.

16. Un microscope comprenant :
un oculaire (608) ;
un objectif (610) ; et
un arrangement de lentilles comprenant au mois une lentille fixe (606) et une lentille liquide à focale variable selon l'une des revendications 1 à 13.

17. Une méthode pour faire varier la focale d'une lentille liquide à focale variable ayant un passage optique pour des faisceaux lumineux, la lentille comprenant une chambre comprenant une première et deuxième électrodes (304, 314, 406, 414) et contenant un premier, deuxième et troisième liquides (201-203 ; 301-303 ; 401-403), lesdits premier et deuxième liquides formant une première interface de réfraction (230, 234, 330, 334, 430, 434) située dans le passage optique de la lentille, et lesdits deuxième et troisième liquides formant une seconde interface (231, 235, 331, 335, 431, 435), la méthode comprenant :
l'application d'une tension entre lesdites première et deuxième électrodes, pour produire un mouvement sélectif du deuxième interface par rapport à une première surface (222, 322) de ladite chambre par électromouillage, tout en maintenant ladite deuxième interface fixement par rapport à une deuxième surface de ladite chambre, où la courbure de la première interface varie en réponse au mouvement de la deuxième interface.
